**Europäisches Patentamt**

**European Patent Office**

**Office européen des brevets**

(19)

(11) Veröffentlichungsnummer : **0 377 411 B1**

(12) **EUROPÄISCHE PATENTSCHRIFT**

(45) Veröffentlichungstag der Patentschrift :
**09.09.92 Patentblatt 92/37**

(51) Int. Cl.$^5$ : **C02F 1/46**

(21) Anmeldenummer : **89810978.0**

(22) Anmeldetag : **22.12.89**

(54) **Verfahren und Vorrichtung zum Entmineralisieren von Frischwasser mittels Elektrolyse.**

(30) Priorität : **04.01.89 CH 19/89**

(43) Veröffentlichungstag der Anmeldung :
**11.07.90 Patentblatt 90/28**

(45) Bekanntmachung des Hinweises auf die
Patenterteilung :
**09.09.92 Patentblatt 92/37**

(84) Benannte Vertragsstaaten :
**AT CH DE FR GB LI**

(56) Entgegenhaltungen :
**EP-A- 0 109 967
WO-A-86/01496
WO-A-87/01108
CH-A- 296 675
DE-A- 2 332 246
DE-A- 2 415 538
DE-U- 8 809 390**

(56) Entgegenhaltungen :
**FR-A- 892 013
FR-A- 966 299
FR-A- 1 227 396
FR-E- 56 654
GB-A- 744 265
GB-A- 822 990
US-A- 3 562 137
US-A- 3 788 967
US-A- 4 235 698
US-A- 4 426 261**

(73) Patentinhaber : **LÜBER, Hans
Sonnenstrasse 2
CH-9534 Gähwil (CH)**

(72) Erfinder : **LÜBER, Hans
Sonnenstrasse 2
CH-9534 Gähwil (CH)**

(74) Vertreter : **Wenger, René et al
Hepp, Wenger & Partner AG Marktgasse 18
CH-9500 Wil (CH)**

**Beschreibung**

Die Erfindung betrifft eine Vorrichtung zum Entmineralisieren von Frischwasser mittels Elektrolyse. Derartige Vorrichtungen sind bereits seit einiger Zeit bekannt und gebräuchlich. Sie dienen dazu, Brauchwasser für verschiedene technische Anlagen, wie z.B. Kühlsysteme, Klimaanlagen, usw. derart elektrolytisch aufzubereiten, dass die Bildung von Kalkstein verhindert wird, und dass Härtebildner, wie z.B. Kalziumsalze entfernt werden. Derartige Vorrichtungen sind z.B. durch die WO-A 87/01108 oder durch die DE-A 22 24 901 bekannt geworden.

Die Erfindung betrifft auch ein Verfahren zum Entmineralisieren von Frischwasser mittels Elektrolyse, bei dem ein Prozess zur Anwendung kommt, wie er etwa bei der Elektrodialyse zur Entsalzung von Meerwasser bereits bekannt ist.

Durch die US-A-3,562,137 ist ein Verfahren für die Abwasserbehandlung bekannt geworden, das mit elektrodialytischen Zellen arbeitet. Jede Zelle besteht aus einer zentralen Anodenelektrode und einer rohrförmigen Kathode. Die Anode ist von einer Membran umgeben und der Zwischenraum zwischen der Kathode und der Membran bildet einen ringförmigen Kanal für das zu behandelnde Abwasser. Der elektrodialytische Vorgang in den Zellen wird von einer Elektrolyse begleitet, wobei die aufsteigenden Gasblasen die Wandpartien der Membran reinigen sollen.

Die bekannten Vorrichtungen und Verfahren erlauben jedoch keine kontinuierliche Behandlung von Wasser, bei der Kalkausscheidungen ohne Ansammlung an einer Elektrode kontinuierlich abgeführt werden und bei der gleichzeitig die Azidität des Wassers und dessen Leitwert eingestellt werden können. Es ist daher Aufgabe der Erfindung, ein Verfahren und eine Vorrichtung der eingangs genannten Art zu schaffen, mit deren Hilfe eine kontinuierliche und möglichst wartungsfreie Wasserbehandlung möglich ist, bei welcher Kalkkristalle zuverlässig ausgeschieden werden und die eine Einstellung des Leitwerts und der Azidität ermöglicht. Diese Aufgabe wird erfindungsgemäss mit einer Vorrichtung mit den Merkmalen von Anspruch 1 und mit einem Verfahren mit den Merkmalen von Anspruch 12 gelöst.

Der an sich bekannte Prozess der Elektrodialyse wird auf überraschend einfache Weise dazu eingesetzt, um koagulierte Kalkkristalle, wie z.B. Kalzit oder Aragonit an einer membranartigen Wand zurückzuhalten und auszufällen. Gleichzeitig können in verschiedenen Kammern elektrolytische Lösungen unterschiedlicher Azidität gebildet werden, was bei entsprechender Entnahme und/oder Mischung des Wassers aus den einzelnen Kammern eine Einstellung des Leitwerts, bzw. der Azidität erlaubt. In der ersten Behandlungskammer erfolgt die Koagulierung der auszufällenden Bestandteile, während in der nachfolgenden zweiten Behandlungskammer diese Bestandteile ausgeschieden werden. Eine Vorrichtung zur Vorbehandlung des Wassers in der ersten Behandlungskammer ist an sich bereits bekannt und z.B. in der DE-U-88 09 390.5 beschrieben. Derartige Vorrichtungen werden z.B. auch dort eingesetzt, wo eine Kalkablagerung z.B. im Leitungsnetz eines Gebäudes verhindert werden soll. Ein Entfernen der koagulierten Bestandteile aus dem Wasser ist jedoch nicht möglich. Auch kann die Azidität des Wassers mit der Vorbehandlungseinrichtung allein nicht eingestellt werden. Dies ist erst mit der erfindungsgemässen Vorrichtung möglich, in der sich auf beiden Seiten der Membran saures bzw. alkalisches Wasser sammelt und in der die koagulierten Feststoffe nach unten abgeführt werden können.

Die Anode des ersten Elektrodenpaares ist stabförmig ausgebildet, wobei die Kathode ein die Anode umgebender Siebkörper ist, und wobei der Auslauf mit dem Hohlraum zwischen Anode und Kathode in Wirkverbindung steht und das Frischwasser durch den Siebkörper leitbar ist. Auch diese Anordnung ist an der Vorbehandlungseinrichtung an sich bereits bekannt. Grobe Verunreinigungen im Frischwasser werden so auf der Aussenseite des Siebkörpers festgehalten und können nicht in die zweite Behandlungskammer gelangen.

Die Elektroden des zweiten Elektrodenpaares sind als stabförmige Gerippe oder als Maschengitter ausgebildet. Dies ergibt eine besonders vorteilhafte, flächige Stromverteilung. Ausserdem wird ein Stützgerippe für die Membran gebildet.

Das Ausfällen der koagulierten Feststoff-Partikel erfolgt besonders vorteilhaft dadurch, dass im Bereich der Kathode des zweiten Elektrodenpaares eine Prallwand angeordnet ist.

Die Elektroden können eben ausgebildet sein und etwa planparallel in der zweiten Behandlungskammer angeordnet sein. Die zweite Behandlungskammer kann ohne weiteres mehrere Elektrodenpaare enthalten, wobei eine hohe Reinigungsleistung erzielt wird.

Eine batterieartige Anordnung mehrerer Elektrodenpaare lässt sich besonders gut realisieren, wenn jedes Elektrodenpaar von einer Haltevorrichtung gehalten ist, die aus einer etwa parallel zu den Elektroden verlaufenden Trägerwand besteht, an welcher die Elektroden fixiert sind, wobei die Anode zwischen der Trägerwand und der Kathode angeordnet ist. Die Trägerwand kann seitliche Abkantungen aufweisen, an denen elektrisch isoliert und lösbar die Elektroden und die dazugehörige Membran und ggf. die Prallwand befestigt sind. So können die Elektroden leicht ausgewechselt oder gereinigt werden. Es hat sich auch überraschend gezeigt, dass es vorteilhaft ist, wenn die Trägerwand aus Aluminium gefertigt ist. Die Trägerwand hat dabei im Elektrolyt

2

EP 0 377 411 B1

der zweiten Behandlungskammer eine Art Katalysatorwirkung und beschleunigt den elektrochemischen Ausscheidungsprozess.

Die Elektroden des zweiten Elektrodenpaares können auch rotationssymmetrisch zueinander angeordnet sein.

Die semipermeablen Wände werden durch ein Gewebe, bestehend aus natürlichen oder künstlichen Fasern gebildet. Diejenige Wand, an welcher die Härtebildner ausgefällt werden, besteht vorzugsweise aus einem sehr dichten Stoff. Dagegen kann die andere Wand bzw. die Membran, welche von den Anionen durchdrungen wird, ein relativ durchlässiger Stoff, z.B. aus Baumwolle sein.

Eine besonders einfache Entsorgung der Ausfällungen ergibt sich, wenn diejenige Kammer, in welcher die Ausfällungen abgetrennt werden, auf der Unterseite geöffnet ist, und wenn der Behälterboden eine Auffangwanne für diese Ausfällungen bildet. In regelmässigen Abständen kann so durch einen automatisierten Spülvorgang die angesammelte Ausfällung ausgespült werden.

Eine Entlüftung im Behälter kann herbeigeführt werden, wenn diese eine Einblasvorrichtung mit einer Luftpumpe zum Einblasen von Luft in den Behälter aufweist und wenn der Behälter mit einer Entlüftungsöffnung versehen ist. Bei dem elektrolytischen Prozess entsteht als Nebenprodukt auch Knallgas, das aus dem Behälter entfernt werden muss. Das Einblasen von Luft in den Behälter bewirkt eine starke Verdünnung und ein Ausspülen des Knallgases.

Die Azidität des der zweiten Behandlungskammer entnommenen Brauchwassers lässt sich einstellen, wenn die zweite Behandlungskammer zwei Abflussleitungen aufweist, von denen eine zur sauren Anionenseite der Membran und die andere zur alkalischen Kationenseite der Membran führt und wenn die Durchflussmengen in den beiden Abflussleitungen durch wenigstens ein Dosierventil steuerbar sind. Die beiden Abflussleitungen können anschliessend wieder zu einer gemeinsamen Abflussleitung vereinigt werden, wobei jedoch eine Teilmenge saures oder alkalisches Wasser als Abwasser abgeführt werden kann.

Weitere Vorteile und Einzelmerkmale der Erfindung ergeben sich aus dem nachstehend beschriebenen Ausführungsbeispiel und aus den Zeichnungen. Es zeigen:

Fig. 1 einen stark vereinfachten Querschnitt durch eine erfindungsgemässe Vorrichtung mit zwei in Serie geschalteten zweiten Behandlungskammern mit rotationssymmetrischen Elektrodenpaaren,

Fig. 2 einen Schnitt durch die ebene A-A gemäss Fig. 1, jedoch in vergrössertem Massstab,

Fig. 3 einen stark vereinfachten Querschnitt durch eine erfindungsgemässe Vorrichtung mit zwei flächig ausgebildeten Elektrodenpaaren in der zweiten Behandlungskammer,

Figur 4 eine Frontalansicht einer Elektrode gemäss Figur 3, und

Figur 5 eine Draufsicht auf ein einzelnes Elektrodenpaar gemäss Figur 3.

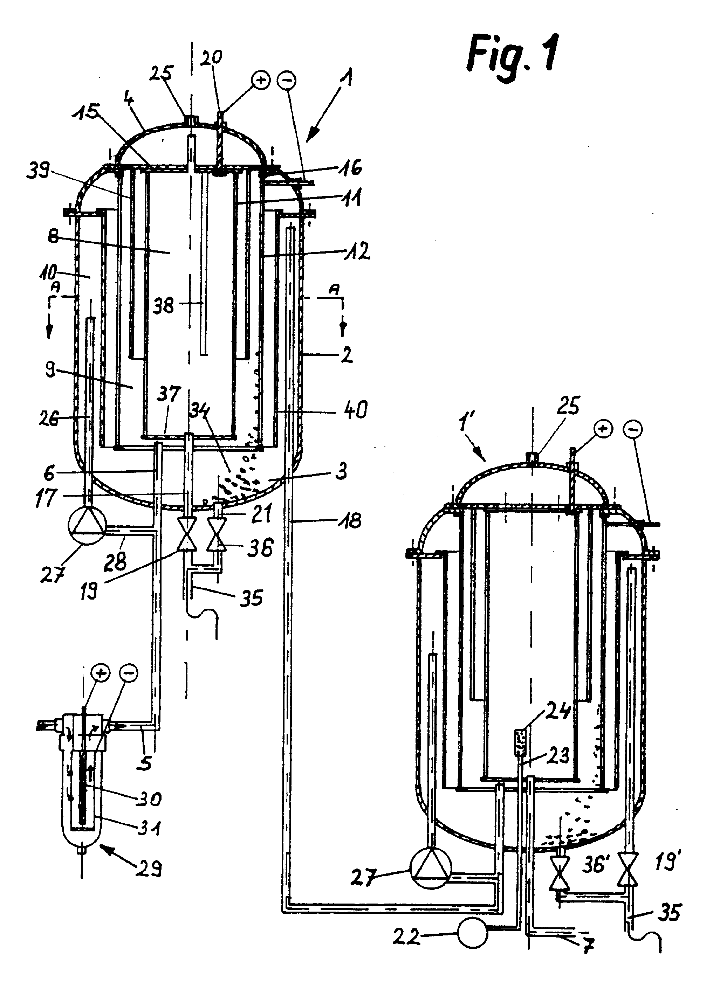

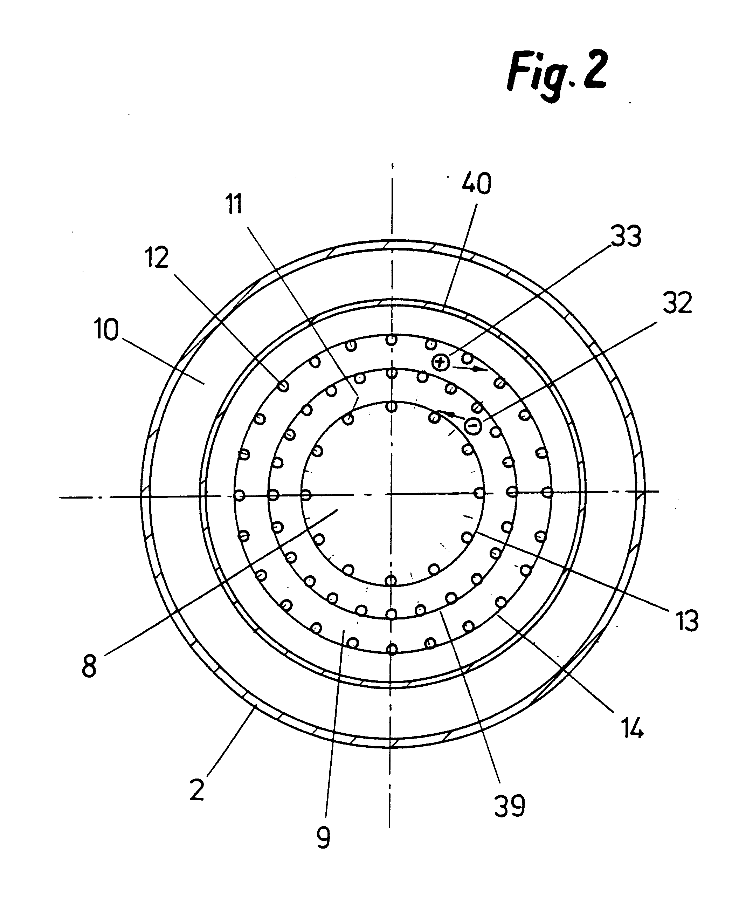

Wie aus den Figuren 1 und 2 ersichtlich ist, besteht die Vorrichtung im wesentlichen aus einem kesselähnlichen Behälter 1 mit einer etwa zylindrischen Aussenwand 2 und mit einem Behälterdeckel 4. Der Behälterboden 3 ist wannenförmig ausgebildet und dient zum Ansammeln der ausgeschiedenen Ausfällungen 34. Am Behälterdeckel 4 ist mit Hilfe von Bolzen 20 ein Stützgerippe 11, bestehend aus kreisförmig angeordneten Stäben befestigt. Die Aussenseite dieses Stützgerippes ist mit einer semipermeablen Wand bzw. Membran 13, z.B. aus Baumwollstoff, bespannt. Das Stütsgerippe 11 ist aus Metall gefertigt und bildet die anode für den elektrolytischen Prozess. Der Behälterdeckel 4, bzw. das daran befestigte innere Stützgerippe 11 ist gegenüber dem restlichen Behälter mit Hilfe einer Deckelisolation 15 elektrisch isoliert.

Um das innere Stützgerippe 11 ist im Abstand ein äusseres Stützgerippe 12 angeordnet, das ebenfalls aus kreisförmig angeordneten Stangen besteht. Dieses Stützgerippe ist auf der Aussenseite ebenfalls mit einer semipermeablen Wand 14 bespannt, die jedoch aus einem dichteren Stoff besteht als die Innenwand 13. Die Wand 14 bildet die Prallwand und muss nicht unbedingt semipermeabel sein und könnte z.B. auch aus einem Kunststoff bestehen. Die Bespannung am Stützgerippe 12 könnte auch auf der Innenseite angeordnet sein. Das Stützgerippe 12 bildet die negative Kathode für den elektrolytischen Prozess. Es ist gegenüber der Behälterwand 3 mit einer Isolation 16 elektrisch isoliert.

Zur Vermeidung elektrolytischer Absonderungen insbesondere an der Anode könnten die Stützgerippe anstelle von Stahl auch aus Graphit gefertigt sein.

Die beiden Wände 13 und 14 unterteilen den Behälter 3 in eine innere Kammer 8, eine mittlere Kammer 9 und eine äussere Kammer 10. Wenigstens die mittlere Kammer 9 ist gegen unten geöffnet, so dass die ausgeschiedene Ausfällungen auf den Behälterboden 3 absinken können. Am Behälterboden 3 ist eine Spülleitung 21 angeschlossen, über die mit einem Magnetventil 36 in regelmässigen Abständen die Ausfällungen 34 aus dem Behälter in den Ausguss 35 ausgespült werden können.

Die innere Kammer 8 ist unten mit einem Boden 37 verschlossen. Ein Auslauf 17 führt von dort über ein Dosierventil 19 ebenfalls in den Ausguss 35.

Zwischen den als Elektroden dienenden Stützgerippen 11 und 12 ist ein elektrisch neutrales Stützgerippe 39 angeordnet, das ebenfalls mit einer semipermeablen Wand bespannt ist. Diese zusätzliche Wand erleichtert den Ausscheidungsprozess der Kalkkristalle, ist jedoch nicht zwingend erforderlich. Alternativ könnten noch weitere Wände eingebaut werden.

Zwischen dem äusseren Stützgerippe 12 und der Behälterwand 2 ist eine feste Ringwand 40 angeordnet, die eine Art Sedimentierkammer bildet.

In der inneren Kammer können Aluminiumstäbe 38 angeordnet seine, die zusammen mit dem sauren Wasser reagieren und so die Ausfällung von Kalk beschleunigen.

Die Zuleitung 6 für das zu behandelnde Wasser ist in der mittleren Kammer 9 bis an den Boden der inneren Kammer 8 herangeführt. Der Boden 37 wirkt dabei als Prallplatte zur Verteilung des Wassers. Die Entnahme des behandelten Wassers aus dem Behälter 1 erfolgt über eine innere Auslaufleitung 17, die in die innere Kammer 8 ragt und über eine äussere Auslaufleitung 18, die in die äussere Kammer 10, und zwar ausserhalb der Ringwand 40, ragt. Die Auslaufleitung 18 führt zu einem weiteren Behälter 1′, wobei die Durchflussmenge mit dem Dosierventil 19 gesteuert werden kann. Ersichtlicherweise ist die Summe der Durchflussmengen in den Abläufen 17 und 18 gleich der Durchflussmenge in der Speiseleitung 5.

Um eine gleichmässige Bearbeitung des gesamten Behälterinhalts zu gewährleisten, ist eine Umwälzpumpe 27 vorgesehen, deren Saugleitung 26 in die äussere Kammer 10 ragt. Die Druckleitung 28 der Umwälzpumpe führt wiederum in die Speiseleitung 5 für das dem Behälter zuzuführende Wasser. Die Saugleitung 26 könnte auch noch an anderen Stellen in den Behälter hineinragen oder z.B. als Ringleitung mit Oeffnungen ausgebildet sein. Auf diese Weise wird verhindert, dass sich im Behälter Randzonen bilden können, in denen keine Umwälzung und Bearbeitung des Wassers stattfindet.

In die Speiseleitung 5 ist eine an sich bekannte Behandlungsvorrichtung 29 für die elektrolytische Vorbehandlung des Wassers eingeschaltet. Diese Vorrichtung weist eine Anode 30 und eine Kathode 31 auf. Die Kathode ist dabei vorzugsweise als Sieb ausgebildet, das bereits grobe Verunreinigungen fernhält. Die Anode kann ein Stab aus Magnesium, Graphit oder Kohle sein. Sowohl an die Stützgerippe 11 und 12, als auch an die Anode 30 und die Kathode 31 ist ein Gleichstromspannungsfeld mit vorzugsweise variabler Spannung angelegt.

Zur Entlüftung des Behälters 1 ist eine Luftpumpe 22 vorgesehen, die über eine Luftleitung 23 Luft in die innere Kammer 8 pumpt. Am Ende der Luftleitung 23 ist ein Verteilerkopf 24 angeordnet, welcher die zugeführte Luft in feine Luftperlen teilt. Am Behälterdeckel 4 ist eine Entlüftungsöffnung 25 angeordnet, die ggf. auch mit einem Ventil versehen sein könnte. Die Entlüftungsvorrichtung ist am Behälter 1′ dargestellt, sie könnte aber analog auch am ersten Behälter 1 vorgesehen sein.

Der Behälter 1′ ist in Serie hinter den Behälter 1 geschaltet, wobei er das Wasser von der Ableitung 18 erhält. Ersichtlicherweise ist die dem Behälter 1′ zugeführte Menge geringer als die Durchflussmenge in der Speiseleitung 5, da eine Teilmenge bereits dem Ausguss 35 zugeführt wird. Der Behälter 1′ ist im wesentlichen gleich aufgebaut wie der Behälter 1. Das Brauchwasser wird jedoch über den Auslauf 7 der inneren Kammer entnommen, während eine Teilmenge des alkalischen Wassers in der äusseren Zone in den Ausguss geleitet wird.

Das über die Speiseleitung 5 zugeführte Wasser gelangt über den Einlauf 6 in den unteren Bereich der mittleren Kammer 8 und wird dort verteilt. Bei einer Versuchsanordnung konnte eine Durchflussmenge von 150 l/Std. kontinuierlich bearbeitet werden. In der Behandlungsvorrichtung 29 werden Kalkkristalle bereits koaguliert, so dass sie sich nicht mehr am metallischen Rohr oder an den Behälterwänden festsetzen können. Durch das im Behälter 1 bestehende Gleichstromspannungsfeld wandern die negative Anionen 32 gegen das positive innere Stützgerippe 11 und durchdringen dabei die Wand 13. Die positiven Kationen 33 wandern zum negativen äusseren Stützgerippe 12. Die im Elektrolyt vorhandenen Kalkkristalle prallen dabei an die Wand 14 und werden von dieser zurückgehalten, so dass sie als Ausfällung 34 auf den Behälterboden 3 absinken. Die Wanderung der Anionen und der Kationen stellt einen Dialyseprozess dar, bei dem ersichtlicherweise in der inneren Kammer 8 ein relativ saures und in der äusseren Kammer 10 ein relativ alkalisches Elektrolyt gebildet wird.

Das Frischwasser hatte bei einer Versuchsanordnung eine Gesamthärte von 41,7° franz. Härte (fH) und eine Karbonathärte von 35,2° franz. Härte (fH). die Nitrat-Ionenkonzentration betrug 31,5 mg/l. Bei einer Spannung von 48 V und einer Stromaufnahme von 15 A wurde in der inneren Kammer 8 ein pH-Wert von ca. 3 und in der äusseren Kammer 10 ein pH-Wert von ca. 10 gemessen. Das Frischwasser hatte einen Leitwert von ca. 800 Mikrosiemens. Nach der Behandlung wurde an dem abgeführten Brauchwasser eine Gesamthärte von 13° fH gemessen. Die Nitrat-Ionenkonzentration betrug 22,5 mg/l und der Leitwert 250 Mikrosiemens. Die Stromaufnahme stellte sich auf ca. 8 A eine.

Wie insbesondere die Nitrat-Ionenkonzentration zeigt, kann mit dem Verfahren nicht nur eine Enthärtung, sondern eine Entmineralisierung des Wassers erreicht werden.

Die Vorrichtung ist ersichtlicherweise bedienungsfreundlich und kann z.B. zu Reinigungszwecken leicht zerlegt werden. In bestimmten zeitlichen Abständen kann eine Reinigung oder Neubespannung inbesondere der Wände 13 und 14 erforderlich werden. Da die Stützgerippe leicht austauschbar sind, reduziert sich bei derartigen Wartungsarbeiten jedoch der Stillstand der Anlage auf ein Minimum.

Der Wirkungsgrad der Vorrichtung kann mit dem nachgeschalteten Behälter 1' verbessert werden. Je nach der Stellung der Dosierventile 19 und 19' kann eine Feineinstellung der angestrebten Werte erreicht werden. Selbstverständlich kann je nach Verwendungszweck des Brauchwassers der Auslauf 7 zu einer inneren oder zu einer äusseren Kammer führen. Die Behälter 1 und 1' müssen nicht zwingend separat angeordnet sein. Sie könnten z.B. auch etagenweise übereinander gebaut sein. In vielen Anwendungsfällen genügt ein einziger Behälter 1. Anstelle der konzentrischen Bauweise wären auch kubische, nebeneinander liegende Kammern denkbar. Eine Regelung der Ventile 19 und 19' oder der Stromversorgung aufgrund bestimmter Parameter wäre denkbar. Ersichtlicherweise sind die einzustellenden Werte immer abhängig von der Zusammensetzung des Frischwassers, die von Ort zu Ort unterschiedlich sein kann.

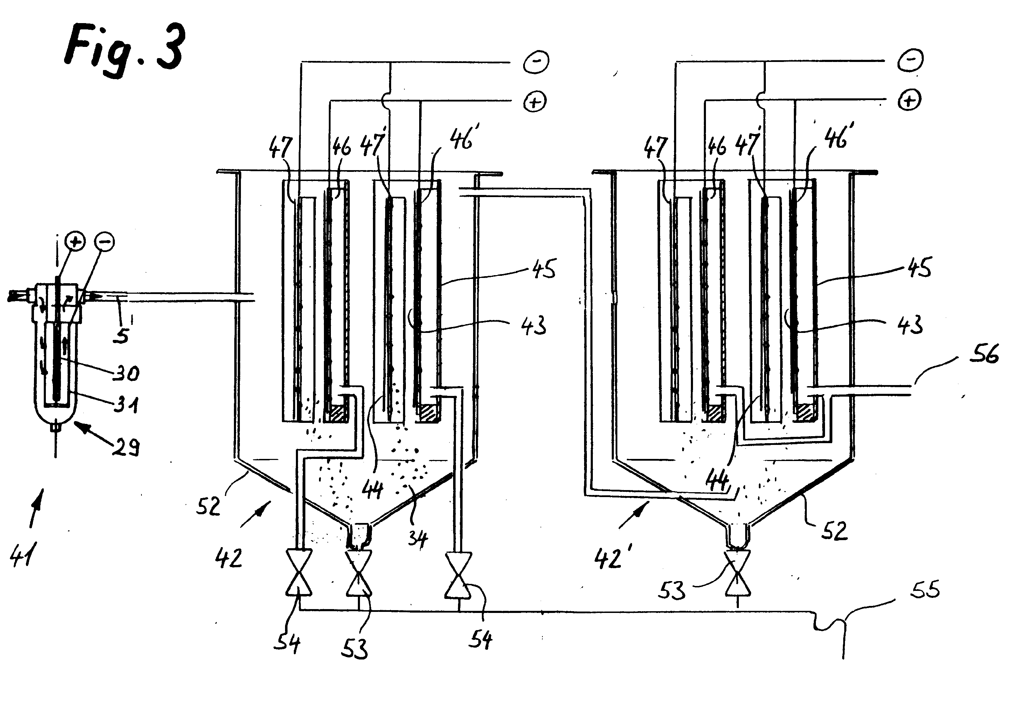

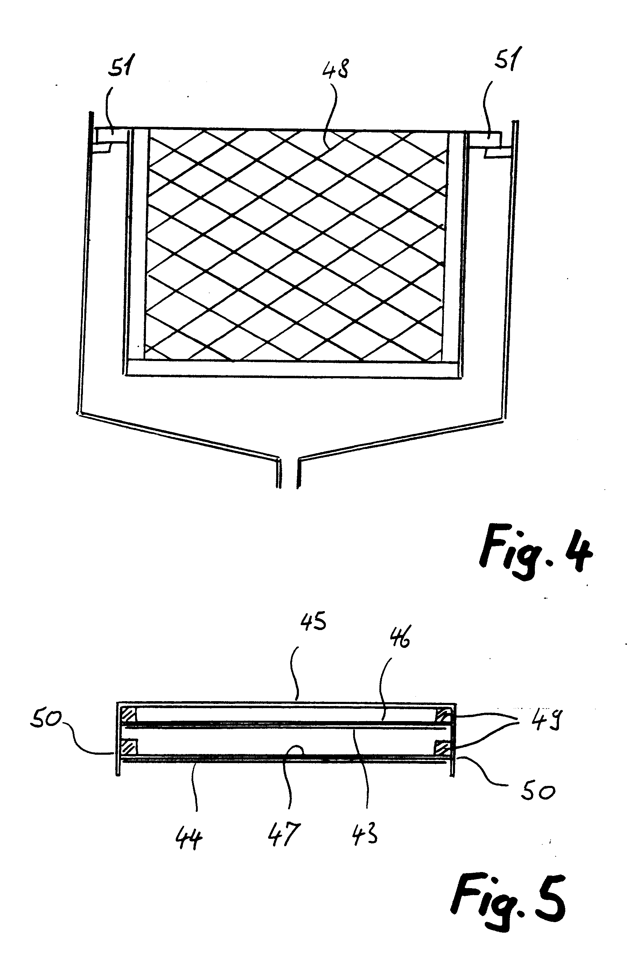

Die Figuren 3 bis 5 zeigen ein alternatives Ausführungsbeispiel, bei dem die zweite Behandlungskammer 42 kubisch ausgebildet ist. Die erste Behandlungskammer 41 ist gleich aufgebaut wie beim vorhergehenden Ausführungsbeispiel und besteht aus einer stabförmigen Anode und aus einer die Anode ringförmig umgebenden Kathode, die jedoch als Siebkörper ausgebildet ist.

In der zweiten Behandlungskammer 42 sind die beiden Elektrodenpaare 46, 47 bzw. 46', 47' angeordnet. Die Anode 46 und die Kathode 47 sind hier flächig ausgebildet und liegen parallel zueinander. Beide elektroden sind als Maschengitter ausgebildet, die z.B. aus Chromstahl bestehen. Es könnte sich hier aber ebenfalls um eine Anordnung von parallelen Stäben handeln.

Jedes Elektrodenpaar ist an einer Trägerwand 45 befestigt, die zwei seitliche Abwinklungen 50 hat. Die Trägerwand besteht aus einem Aluminiumblech. Sie hat die gleiche Funktion wie die Aluminiumstäbe 38 beim vorhergehenden Ausführungsbeispiel. An den seitlichen Abwinklungen sind Rahmen 49 befestigt, die aus einem elektrisch isolierenden Werkstoff bestehen. An jedem dieser Rahmen ist eine elektrode vorzugsweise lösbar befestigt.

Zwischen der Anode 46 und der Kathode 47 ist die Membran 43 gespannt. Sie kann entweder auf der Elektrode aufliegen oder im Abstand zu dieser angeordnet sein. Unmittelbar bei der Kathode 47 ist die Prallwand 44 gespannt, an der die Kalkkristalle 34 aufprallen und nach unten abgleiten. Wie aus Figur 3 ersichtlich ist, ist jeweils die Kathode 47 bzw. die Prallwand 44 in der Höhe etwas kürzer ausgebildet als die Anode 46 bzw. die Membran 43. Damit werden vorteilhafte Strömungsverhältnisse erreicht. Das Wasser strömt in der Kammer zwischen Membran und Prallwand aufwärts und sinkt wiederum hinter der Prallwand.

Die einzelnen Elektrodenpaare bzw. die Trägerwände 45 sind an seitlichen Auflagern 51 in der zweiten Behandlungskammer aufgehängt. Selbstverständlich ist auch hier die zweite Behandlungskammer oben mit einem Deckel verschlossen und ggf. mit Belüftungs- bzw. Entlüftungsleitungen und -Ventilen versehen wie beim ersten Ausführungsbeispiel. Eine weitere Behandlungskammer 42' ist in Serie an die Kammer 42 angeschlossen und etwa gleich aufgebaut wie diese.

Die Ausfällungen werden am Boden der zweiten Behandlungskammer in einer Auffangwanne 52 gesammelt und können über ein Abschlämmventil 53 dem Ausguss 55 zugeleitet werden. Das Brauchwasser wird über die Abflussleitung 56 entnommen, wobei aber eine zweite Abflussleitung auch noch saures Wasser aus der Anionenseite der Kammer 42 ableitet und über die Dosierventile 54 dem Ausguss 55 zuführt. Ueber die Ventile 53 an beiden Kammern 42, 42' könnte auch permanent eine Teilmenge alkalisches Wasser abgeführt werden. Durch diese Massnahmen kann die Azidität des Wassers ersichtlicherweise beeinflusst werden.

**Patentansprüche**

1. Vorrichtung zum Entmineralisieren von Frischwasser mittels Elektrolyse, gekennzeichnet durch
   – eine erste Behandlungskammer für die elektrolytische Vorbehandlung des Wassers mit einem Einlauf für das Frischwasser und mit einem Auslauf,
   – ein in der ersten Behandlungskammer angeordnetes erstes Elektrodenpaar, das an eine Gleichstromquelle angeschlossen ist und dessen Anode aus Magnesium, Kohle oder Graphit besteht, wobei die Anode stabförmig ausgebildet ist, und die Kathode ein die Anode umgebender Siebkörper ist, und wobei der Auslauf mit dem Hohlraum zwischen Anode und Kathode in Wirkverbindung steht und das Frischwasser durch den Siebkörper leitbar ist,
   – wenigstens eine zweite Behandlungskammer, die an den Auslauf der ersten Behandlungskammer angeschlossen ist,
   – wenigstens ein in der zweiten Behandlungskammer angeordnetes, zweites Elektrodenpaar, das an eine Gleichstromquelle angeschlossen ist und dessen Elektroden als stabförmige Gerippe oder als Maschengitter ausgebildet sind,

– eine semipermeable Membran aus einem Gewebe aus natürlichen oder künstlichen Fasern zwischen der Anode und der Kathode des zweiten Elektrodenpaares, wobei die Anode ein Stützgerippe bildet, das mit der Membran bespannt ist,
– wenigstens eine Abflussleitung für das gereinigte Wasser und
– eine Entsorgungseinrichtung am Boden der zweiten Behandlungskammer zum Abführen der ausgeschiedenen Feststoffe.

2. Vorrichtung nach Anspruch 1, dadurch gekennzeichnet, dass im Bereich der Kathode des zweiten Elektrodenpaares eine Prallwand zum Ausfällen von Feststoffen angeordnet ist.

3. Vorrichtung nach Anspruch 1 oder 2, dadurch gekennzeichnet, dass die Elektroden des zweiten Elektrodenpaares eben ausgebildet sind und etwa planparallel in der zweiten Behandlungskammer angeordnet sind.

4. Vorrichtung nach Anspruch 3, dadurch gekennzeichnet, dass die Elektroden des zweiten Elektrodenpaares von einer Haltevorrichtung gehalten sind, die aus einer etwa parallel zu den Elektroden verlaufenden Träger-Wand besteht, an welcher die Elektroden fixiert sind, wobei die Anode zwischen der Trägerwand und der Kathode angeordnet ist.

5. Vorrichtung nach Anspruch 4, dadurch gekennzeichnet, dass die Trägerwand seitliche Abkantungen aufweist, an denen elektrisch isoliert und lösbar die Elektroden und die dazugehörige Membran und ggf. die Prallwand lösbar befestigt sind.

6. Vorrichtung nach Anspruch 5, dadurch gekennzeichnet, dass die Trägerwand aus Aluminium gefertigt ist.

7. Vorrichtung nach einem der Ansprüche 3 bis 6, dadurch gekennzeichnet, dass in der zweiten Behandlungskammer mehrere Elektrodenpaare nebeneinander angeordnet sind.

8. Vorrichtung nach Anspruch 1 oder 2, dadurch gekennzeichnet, dass die Elektroden des zweiten Elektrodenpaares rotationssymmetrisch zueinander angeordnet sind.

9. Vorrichtung nach einem der Ansprüche 1 bis 8, dadurch gekennzeichnet, dass der Boden der zweiten Behandlungskammer eine Auffangwanne für die Ausfällungen bildet, und dass die Entsorgungseinrichtung ein am tiefsten Punkt der Auffangwanne angeschlossenes Abschlämmventil ist.

10. Vorrichtung nach einem der Ansprüche 1 bis 9, dadurch gekennzeichnet, dass die zweite Behandlungskammer zwei Abflussleitungen aufweist, von denen eine zur sauren Anionenseite der Membran und die andere zur alkalischen Kationenseite der Membran führt, und dass die Durchflussmengen in den beiden Abflussleitungen durch wenigstens ein Dosierventil steuerbar sind.

11. Vorrichtung nach einem der Ansprüche 1 bis 13, dadurch gekennzeichnet, dass sie eine Einblasvorrichtung mit einer Luftpumpe (22) zum Einblasen von Luft in die zweite Behandlungskammer aufweist, und dass diese mit einer Entlüftungsöffnung (25) versehen ist.

12. Verfahren zum Entmineralisieren von Frischwasser mittels Elektrolyse, dadurch gekennzeichnet, dass das Frischwasser für die elektrolytische Vorbehandlung durch eine erste Behandlungskammer geleitet wird, in der ein an eine Gleichstromquelle angeschlossenes erstes Elektrodenpaar angeordnet ist,-dessen Anode aus Magnesium, Kohle oder Graphit besteht,
dass das Wasser aus der ersten Behandlungskammer in wenigstens eine zweite Behandlungskammer geleitet wird, in der ein an eine Gleichstromquelle angeschlossenes zweites Elektrodenpaar angeordnet ist, wobei zwischen Anode und Kathode eine semipermeable Membran und im Bereich der Kathode eine Prallwand angeordnet ist,
und dass am zweiten Elektrodenpaar ein elektrisches Gleichstromfeld derart aufrecht erhalten wird, dass sich durch Wanderung der Anionen und der Kationen durch die Membran ein saures und ein alkalisches Elektrolyt bildet, wobei die Ausfällungen gegen die Prallwand prallen und gegen den Boden der zweiten Behandlungskammer abgeleitet werden und dort entnommen werden,
und dass ferner die Azidität des der zweiten Behandlungskammer entnommenen Brauchwassers dadurch bestimmt wird, dass aus dem sauren oder aus dem alkalischen Abschnitt der Kammer eine Teilmenge als Abwasser abgeführt wird.

**Claims**

1. Device for demineralising fresh water by electrolysis, characterised by

   a) a first treatment chamber for the electrolytic pretreatment of the water with an inlet for the fresh water and an outlet,

   b) a first electrode pair mounted in the first treatment chamber, which is connected to a direct current source and whose anode consists of magnesium, carbon or graphite, wherein the anode is rod-shaped, and the cathode is a filter body surrounding the anode, and the outlet communicates actively with the space between the anode and the cathode, and the fresh water can be conducted through the filter body,

   c) at least one second treatment chamber, which is connected to the outlet of the first treatment chamber,

   d) at least one second electrode pair mounted in the second treatment chamber and connected to a direct current source and whose electrodes are formed as a rod-shaped cage or as a grid mesh,

   e) a semipermeable membrane consisting of a fabric composed of natural or synthetic fibres between the anode and the cathode of the second electrode pair, the anode forming a support cage on which the membrane is mounted,

   f) at least one discharge pipe for the cleaned water and

   g) a waste disposal unit at the bottom of the second treatment chamber for discharging the separated solids.

2. Device according to claim 1, characterised in that an impact wall for the precipitation of solids is mounted in the region of the cathode of the second electrode pair.

3. Device according to claim 1 or 2, characterised in that the electrodes of the second electrode pair are flat and are mounted approximately in a plane-parallel manner in the second treatment chamber.

4. Device according to claim 3, characterised in that the electrodes of the second electrode pair are held by a holding device, which consists of a supporting wall extending approximately parallel to the electrodes, to which the electrodes are fixed, the anode being mounted between the supporting wall and the cathode.

5. Device according to claim 4, characterised in that the supporting wall has lateral angled portions to which the electrodes are fixed in a detachable and insulated manner and the associated membrane and optionally the impact wall are attached in a detachable manner.

6. Device according to claim 5, characterised in that the supporting wall is made of aluminium.

7. Device according to one of claims 3 to 6, characterised in that a plurality of electrode pairs are mounted adjacent to one another in the second treatment chamber.

8. Device according to claim 1 or 2, characterised in that the electrodes of the second electrode pair are mounted with rotational symmetry relative to one another.

9. Device according to one of claims 1 to 8, characterised in that the bottom of the second treatment chamber forms a collecting trough for the precipitates, and in that the waste disposal unit is a straining valve connected to the lowest point of the collecting trough.

10. Device according to one of claims 1 to 9, characterised in that the second treatment chamber has two discharge pipes, one leading to the acidic anion side of the membrane and the other to the alkaline cation side of the membrane, and in that the flow rates in the two discharge pipes are controllable by at least one metering valve.

11. Device according to one of claims 1 to 13, characterised in that it has an injection device with an air pump (22) for blowing air into the second treatment chamber, and in that this is provided with a ventilation aperture (25).

12. Process for demineralising fresh water by electrolysis, characterised in that the fresh water for electrolytic pretreatment is passed through a first treatment chamber, in which a first electrode pair connected to a direct current source is mounted, whose anode consists of magnesium, carbon or graphite,

    in that the water is conducted from the first treatment chamber into at least one second treatment chamber, in which a second electrode pair connected to a direct current source is mounted, wherein a semipermeable membrane is mounted between the anode and cathodeand and an impact wall is located in the region of the cathode,

and in that an electric direct current field is so maintained at the second electrode pair that, by the migration of anions and cations through the membrane, an acidic and an alkaline electrolyte form, in which case the precipitates hit the impact wall and are discharged against the bottom of the second treatment chamber and are removed there,

and in that furthermore the acidity of the used water removed from the second treatment chamber is determined by discharging as effluent some of the liquid from the acidic or from the alkaline section of the chamber.

## Revendications

1 - Dispositif pour la déminéralisation de l'eau douce par électrolyse, caractérisé par :
– une première chambre de traitement pour le prétraitement électrolytique de l'eau, comportant une entrée pour l'eau douce et une sortie ;
– une première paire d'électrodes, qui est disposée dans la première chambre de traitement, qui est raccordée à une source de courant continu, et dont l'anode est en magnésium, carbone ou graphite et l'anode est réalisée sous la forme d'une tige, la cathode étant un élément perforé entourant l'anode, la sortie étant en liaison active avec la cavité entre l'anode et la cathode et l'eau douce pouvant être acheminée à travers l'élément perforé ;
– au moins une deuxième chambre de traitement, qui est raccordée à la sortie de la première chambre de traitement ;
– au moins une deuxième paire d'électrodes, qui est disposée dans la deuxième chambre de traitement, qui est raccordée à une source de courant continu, et dont les électrodes sont réalisées sous la forme d'ossatures en forme de tiges ou de grilles à mailles ;
– une membrane semi-perméable en un tissu de fibres naturelles ou artificielles entre l'anode et la cathode de la deuxième paire d'électrodes, l'anode formant une ossature d'appui, qui est recouverte par la membrane ;
– au moins une conduite d'écoulement pour l'eau purifiée; et
– une installation de décharge au fond de la deuxième chambre de traitement pour l'évacuation des matières solides déposées.

2 - Dispositif selon la revendication 1, caractérisé par le fait que, dans la zone de la cathode de la deuxième paire d'électrodes, est disposée une paroi d'impact pour la précipitation des matières solides.

3 - Dispositif selon la revendication 1 ou 2, caractérisé par le fait que les électrodes de la deuxième paire d'électrodes sont à configuration plane et sont disposées avec leurs plans sensiblement parallèles dans la deuxième chambre de traitement.

4 - Dispositif selon la revendication 3, caractérisé par le fait que les électrodes de la deuxième paire d'électrodes sont maintenues par un dispositif de soutien, qui consiste en une paroi support s'étendant sensiblement parallèlement aux électrodes, sur laquelle sont fixées les électrodes, l'anode étant disposée entre la paroi support et la cathode.

5 - Dispositif selon la revendication 4, caractérisé par le fait que la paroi support présente des chanfreins latéraux, sur lesquels sont fixées, d'une manière électriquement isolée et amovible, les électrodes et la membrane associée et, le cas échéant, d'une manière amovible, la paroi d'impact.

6 - Dispositif selon la revendication 5, caractérisé par le fait que la paroi support est fabriquée en aluminium.

7 - Dispositif selon l'une quelconque des revendications 3 à 6, caractérisé par le fait que, dans la deuxième chambre de traitement, plusieurs paires d'électrodes sont disposées les unes à côté des autres.

8 - Dispositif selon la revendication 1 ou 2, caractérisé par le fait que les électrodes de la deuxième paire d'électrodes sont disposées l'une par rapport à l'autre à symétrie de révolution.

9 - Dispositif selon l'une quelconque des revendications 1 à 8, caractérisé par le fait que le fond de la deuxième chambre de traitement forme une cuve réceptrice pour les précipités, et que l'installation de décharge est une soupape de purge raccordée au point le plus bas de la cuve réceptrice.

10 - Dispositif selon l'une quelconque des revendications 1 à 9, caractérisé par le fait que la deuxième chambre de traitement présente deux conduites d'écoulement, dont l'une mène vers le côté anionique acide de la membrane, et l'autre, vers le côté cationique alcalin de la membrane, et que les débits dans les deux conduites d'écoulement peuvent être réglés par au moins une soupape de réglage.

11 - Dispositif selon l'une quelconque des revendications 1 à 10, caractérisé par le fait qu'il présente un dispositif d'insufflation de gaz, comportant une pompe à air (22) pour l'insufflation d'air dans la deuxième chambre de traitement, et que celle-ci est dotée d'un évent (25).

12 - Procédé pour la déminéralisation de l'eau douce par électrolyse, caractérisé par le fait :

– que l'on achemine l'eau douce pour le prétraitement électrolytique à travers une première chambre de traitement, dans laquelle est disposée une première paire d'électrodes, qui est raccordée à une source de courant continu et dont l'anode est en magnésium, carbone ou graphite ;

– que l'on achemine l'eau sortant de la première chambre de traitement dans au moins une deuxième chambre de traitement, dans laquelle est disposée une deuxième paire d'électrodes raccordée à une source de courant continu, une membrane semi-perméable étant disposée entre l'anode et la cathode, et une paroi d'impact étant disposée dans la zone de la cathode ; et

– que l'on maintient sur la deuxième paire d'électrodes un champ électrique de courant continu, de telle sorte qu'il se forme, par la migration des anions et des cations à travers la membrane, un électrolyte acide et un électrolyte alcalin, les précipités venant heurter la paroi d'impact et étant amenés contre le fond de la deuxième chambre de traitement, d'où ils sont prélevés; et

– qu'en outre, on règle l'acidité de l'eau à usage industriel prélevée de la deuxième chambre de traitement en évacuant de la section acide ou de la section alcaline de la chambre, une fraction d'eau en tant qu'eau résiduaire.

# Fig.1

Fig. 2

Fig. 3

12

**Fig. 4**

**Fig. 5**